# FASCICULE DE BREVET EUROPEEN

(11) **EP 1 717 021 B1**
(45) Date de publication et mention de la délivrance du brevet: **27.06.2012**
(21) Numéro de dépôt: 05290945.4
(22) Date de dépôt: 29.04.2005
(51) Int. Cl.: B32B 27/32, B65D 65/40

(54) **Film thermorétractable, de haute clarté et de haute rigidité**
Wärmeschrumpfbarer Film mit hoher Klarheit und hoher Steifigkeit
Heat-shrinkable film of high clarity and rigidity

(43) Date de publication de la demande: 02.11.2006
(73) Titulaire: Ceisa Packaging, 75017 Paris (FR)
(72) Inventeur: Mathe, Christophe, 27670 St. Ouen du Tilleul (FR)
(74) Mandataire: Casalonga, Axel

(56) Documents cités:
- EP-A- 1 279 494
- FR-A- 2 777 502
- DATABASE WPI Section Ch, Week 199339 Derwent Publications Ltd., London, GB; Class A17, AN 1993-308774 XP002347394 & JP 05 220909 A (SEKISUI CHEM IND CO LTD) 31 août 1993 (1993-08-31)

## Description

La présente invention est relative à un film thermorétractable de haute clarté et de haute rigidité, et à un emballage de groupement de produits.

Dans le domaine de l'emballage de groupements de produits tels que des bouteilles, par exemple d'eaux minérales ou de jus de fruit, des boîtes métalliques, par exemple des boîtes de bière ou d'autres boissons, des briques, par exemple de lait ou d'autres boissons, on utilise des films de polyéthylène, thermorétractables, et plus particulièrement des films de polyéthylène, thermorétractables, de haute clarté ou non.

Des films d'emballage thermorétractables à base de polyéthylène sont connus des documents EP 1 279 494, JP 05-220909 et WO 2004/024433. Ces films comprennent une couche centrale et deux couches externes. La couche centrale comprend du polyéthylène haute densité en une quantité supérieure à 50 % en poids de la couche centrale, et du polyéthylène basse densité, tandis que chacune des couches externes comprennent du polyéthylène basse densité linéaire.

Les films d'emballage en polyéthylène, thermorétractables, sont classiquement réalisés par monoextrusion ou coextrusion au moyen d'une machine d'extrusion-soufflage. Le film de polyéthylène est extrudé dans une filière annulaire et est gonflé pour former une bulle de polyéthylène qui est ensuite remise à plat pour être enroulée.

Le film ainsi obtenu est ensuite utilisé pour emballer des groupements de produits. Le film est alors disposé autour du groupement de produits à emballer et l'ensemble est ensuite placé dans un four à une température appropriée pour que le film se rétracte autour des produits du groupement pour le serrer et lui donner de la cohésion.

Les films de polyéthylène, thermorétractables, dits "haute clarté", actuels sont obtenus par coextrusion de trois couches. Plus précisément, les films de polyéthylène "haute clarté" comprennent une couche centrale constituée majoritairement de polyéthylène radicalaire de densité 0,918-0,930 prise en sandwich entre deux couches de polyéthylène spécial très brillant, constituées majoritairement de polyéthylène linéaire obtenu par synthèse métallocène (polyéthylène linéaire métallocène), de densité 0,918-0,927.

En général, les couches externes brillantes des films "haute clarté" comprennent de 80 à 90% en poids, idéalement 90% en poids, par rapport au poids total du mélange, de polyéthylène linéaire métallocène et la couche centrale comprend plus de 50% en poids, par rapport au poids total des polymères, de polyéthylène radicalaire standard.

FR 2 777 502 décrit un film de polyéthylène thermorétractable de haute clarté qui comprend une couche centrale constituée d'un mélange de polyéthylène basse densité radicalaire et de polyéthylène linéaire classique, et deux couches externes comprenant au moins 50 % en poids de polyéthylène linéaire classique, chacune des deux couches externes étant exempte de polyéthylène linéaire métallocène.

Les films de haute clarté utilisés sur des lignes de fardelage, à savoir des lignes de regroupement de bouteilles ou contenants divers, doivent présenter en outre une rigidité suffisante pour une mise en oeuvre adéquate. Un manque de rigidité du film utilisé sur ce type de ligne entraîne des défauts de coupe, de tenue du film sur la table de montée et lors du fardelage. De tels phénomènes sont notamment mis en évidence :
- lorsque les films sont utilisés sur des machines à haute cadence, par exemple 80 cycles par minute et plus,
- lorsque les épaisseurs des films sont réduites, par exemple pour les films d'une épaisseur inférieure à 55 µm, et/ou
- lorsque les films sont utilisés dans une température ambiante au-dessus de 20-25°C, et plus particulièrement en cas de fortes chaleurs, par exemple lorsque la température atteint environ 40°C.

Il existe donc un besoin pour un film de haute clarté et de haute rigidité permettant, outre de faciliter la mise en oeuvre à haute cadence des lignes de fardelage et dans une température ambiante élevée, de réduire l'épaisseur des films d'emballage et de réduire le coût de l'emballage: Cette réduction de l'épaisseur des films d'emballage permet de plus une réduction des déchets chez les utilisateurs intermédiaires et finaux du film.

La demanderesse a trouvé de manière surprenante que, bien que le polyéthylène haute densité présente un caractère trouble et très peu brillant qui nuit au film de haute clarté de l'art antérieur, il était possible d'obtenir néanmoins un film de haute clarté et de haute rigidité particulière comprenant une couche centrale comprenant du polyéthylène basse densité radicalaire et du polyéthylène haute densité.

La présente invention a donc pour objet un film thermorétractable, de haute clarté et de haute rigidité, présentant une contrainte au seuil d'écoulement supérieure à 15,5 N/mm² dans les sens machine et travers, comprenant :
- une couche centrale comprenant du polyéthylène basse densité radicalaire et du polyéthylène haute densité,
- prise en sandwich entre deux couches externes, chacune des couches externes comprenant au moins 50% en poids, par rapport au poids total de la couche, de polyéthylène linéaire, et ayant une épaisseur représentant de 5 à 25% de l'épaisseur totale du film.

Par film "haute clarté", on entend un film présentant une brillance supérieure ou égale à 90 % et un trouble inférieur ou égal à 3%.

La brillance est mesurée selon la DIN 67530 et le trouble est mesuré selon la norme ASTM D1003.

Par film "haute rigidité", on entend donc un film présentant une contrainte au seuil d'écoulement supérieure à 15,5 N/mm² dans les sens machine (ou sens longitudinal du film) et sens travers (ou sens transversal), de préférence supérieure à 16 N/mm², mieux encore supérieure ou égale à 16,5 N/mm². La contrainte est mesurée selon la norme ISO 527/3, sur des éprouvettes normalisées de film.

Selon cette norme, on mesure l'allongement du film pour une force croissante de traction appliquée au film (mesurée en N/mm²) et une vitesse normalisée. La courbe de traction ainsi obtenue, représentant la contrainte (en N/mm²) en fonction de l'allongement (en %), fait apparaître un point d'inflexion qui caractérise la fin de la limite élastique du film ou seuil d'écoulement. L'abscisse de ce point est typiquement située entre 12 et 15% d'allongement et l'ordonnée varie d'un film à un autre, selon la rigidité du film.

Le polyéthylène haute densité utilisé dans la couche centrale présente de préférence une densité comprise entre 0,945 et 0,980, mieux encore entre 0,955 et 0,965.

La densité est quant à elle déterminée en plongeant la matière dans une colonne liquide ayant un gradient de densité connue. La norme utilisée est l'ASTM 1505.

Le polyéthylène haute densité utilisé dans la présente invention est fabriqué par polymérisation en phase gazeuse et basse pression. Celui-ci est caractérisé par une rigidité très élevée définie par la contrainte du seuil à l'écoulement. Dans le cas présent, la contrainte au seuil d'écoulement d'un tel polymère est de 30 N/mm².

Le polyéthylène haute densité est présent en une quantité de 10 à 20 % en poids par rapport au poids total de la couche centrale.

Le polyéthylène radicalaire utilisé dans la couche centrale présente de préférence une densité comprise entre 0,918 et 0,935, mieux encore entre 0,928 et 0,932. Il est de préférence compris entre une quantité allant de 50 à 95 % en poids, mieux encore de 80 à 90 % en poids par rapport au poids total de la couche centrale.

La couche centrale du film selon l'invention peut en outre comprendre au moins un additif qui est plus particulièrement choisi parmi les agents de glissement et les agents antistatiques. Les agents de glissement ont pour but d'abaisser le coefficient de friction, pour faciliter le passage sur la ligne de fardelage. Les agents antistatiques ont pour but de rendre la surface du film conductrice améliorant ainsi la dissipation des charges électrostatiques. Ces additifs peuvent être également utilisés dans les deux couches externes.

Le(s) additif(s) est ou sont de préférence compris en une quantité allant de 1 à 5 % en poids, mieux encore de 1,5 à 2,5 % en poids par rapport au poids total de la couche centrale.

La couche centrale a une épaisseur représentant de 50 à 90%, mieux encore de 70 à 90 %, et plus particulièrement de l'ordre de 80 % de l'épaisseur totale du film. Les couches externes peuvent être de composition identique ou différente et d'épaisseur identique ou différente, mais sont de préférence de même composition et de même épaisseur.

Chacune des couches externes comprend au moins 50 % en poids, de préférence de 50 à 100 % en poids, mieux encore de 65 à 85 % en poids et plus particulièrement 80 % en poids, par rapport au poids total de la couche, de polyéthylène linéaire, le complément étant du polyéthylène basse densité radicalaire.

La présence dans les couches externes de polyéthylène basse densité linéaire confère au film ses propriétés optiques. Le polyéthylène basse densité radicalaire quant à lui confère aux couches externes du film une propriété de rétraction, et permet donc une bonne rétraction du film dans son ensemble.

Le polyéthylène linéaire peut être soit un polyéthylène linéaire classique présentant une densité comprise entre 0,918 et 0,936, mieux encore entre 0,925 et 0,927, soit un polyéthylène linéaire métallocène.

Le polyéthylène linéaire métallocène présente une densité comprise entre 0,918 et 0,947 et mieux encore entre 0,918 et 0,927. Le polyéthylène linéaire métallocène comprend de préférence un comonomère de butène-1, d'héxène-1 ou d'octène-1, et est fabriqué par polymérisation en phase gazeuse en présence d'un catalyseur spécifique appelé « métallocène ». Ce procédé permet une distribution étroite des chaînes moléculaires.

Dans le cas où la couche externe est exempte de polyéthylène linéaire métallocène, c'est-à-dire où le polyéthylène linéaire est un polyéthylène linéaire classique, ce dernier est de préférence un polyéthylène linéaire comprenant comme comonomère du butène-1, de l'hexène-1 et de l'octène-1, et en particulier le butène-1.

Comme cela est bien connu, les polyéthylènes linéaires sont fabriqués par polymérisation en phase gazeuse en présence d'un catalyseur de type Ziegler-Natta.

Le polyéthylène linéaire classique présente de préférence une densité comprise entre 0,918 et 0,936, mieux encore entre 0,925 et 0,927.

Le polyéthylène basse densité radicalaire utilisé en association avec le polyéthylène linéaire dans la couche externe est tel que décrit ci-dessus, et peut être identique à celui utilisé dans la couche centrale.

Comme cela est bien connu, le mélange de polyéthylènes constituant les deux couches externes peut comporter au moins un adjuvant classiquement utilisé dans les proportions usuelles, tel que, par exemple, des auxiliaires de traitement (élastomères fluorés à un taux supérieur à 100 ppm, généralement de l'ordre de 500 ppm), des agents antistatiques et des agents de glissement.

Les auxiliaires de traitement sont des ingrédients bien connus dans la technologie des polyéthylènes et ont pour but de faciliter l'extrusion des polyéthylènes linéaires et d'éviter le phénomène de peau d'orange en lissant la surface du film.

Les agents de glissement sont également des ingrédients classiques qui ont pour but d'abaisser le coefficient de friction du film. Parmi ces agents de glissement, on peut citer les érucamides.

Parmi les agents antistatiques, on peut citer les amines éthoxylées.

Chacune des couches externes a de préférence une épaisseur représentant 5 à 25%, mieux encore 5 à 15%, et plus particulièrement de l'ordre de 10% de l'épaisseur totale du film.

Les films selon l'invention ont en général une épaisseur totale comprise entre 10 et 120 µm, de préférence de 30 à 100 µm.

Les films selon l'invention sont obtenus par coextrusion.

La présente invention a encore pour objet un groupement de produits emballé au moyen d'un film thermorétracté, tel que défini ci-dessus.

L'exemple ci-après est destiné à illustrer la présente invention.

### EXEMPLE

On a fabriqué par coextrusion un film de polyéthylène, thermorétractable, de haute clarté et de haute rigidité, d'épaisseur 50 µm, ayant la structure et la composition indiquées ci-dessous.

### Composition en % en poids par rapport au poids total de la couche :

| | Couche externe 1 | Couche centrale | Couche externe 2 |
|---|---|---|---|
| PEBD⁽¹⁾ | 20,0 % | 83,4 % | 20,0 % |
| PEBDL⁽²⁾ | 77,0 % | - | 77,0 % |
| PEHD⁽³⁾ | - | 15,0 % | - |
| Additifs | 3,0 % | 1,6 % | 3,0 % |
| Epaisseur (% de l'épaisseur totale) | 10 | 80 | 10 |
| Densité de chaque couche | 0,927 | 0,934 | 0,927 |

| | | | |
|---|---|---|---|
| ⁽¹⁾ : Polyéthylène basse densité radicalaire de densité d=0,928 ⁽²⁾ : Polyéthylène basse densité linéaire de densité d=0,925. ⁽³⁾ : Polyéthylène haute de densité d=0,961 | | | |

On a mesuré la brillance à 20° du film obtenu, selon la norme DIN 67530 et le trouble selon la norme ASTM D1003.

Les résultats sont donnés ci-après.
Brillance à 20° : 90%
Trouble : 3%

La rigidité est évaluée à l'aide de la contrainte à la force d'écoulement, mesurée selon la norme ISO 527/3. Elle est égale à 16,5 N/mm² pour le film ci-dessus dans les sens machine et travers.

## Revendications

1. Film thermorétractable, de haute clarté et de haute rigidité, présentant une brillance supérieure ou égale à 90 % selon la DIN 67530 et un trouble inférieur ou égal à 3% selon la norme ASTM D1003, et une contrainte au seuil d'écoulement supérieure à 15,5 N/mm² selon la norme ISO 527/3 dans les sens machine et travers, comprenant :
- une couche centrale comprenant du polyéthylène basse densité radicalaire et du polyéthylène haute densité, le polyéthylène haute densité étant présent en une quantité de 10 à 20 % en poids par rapport au poids total de la couche centrale,
- prise en sandwich entre deux couches externes, chacune des couches externes comprenant au moins 50% en poids, par rapport au poids total de la couche, de polyéthylène linéaire, et ayant une épaisseur représentant de 5 à 25% de l'épaisseur totale du film.

2. Film selon la revendication 1, **caractérisé en ce que** le polyéthylène haute densité présente une densité comprise entre 0,945 et 0,980.

3. Film selon l'une quelconque des revendications précédentes, **caractérisé en ce que** la couche centrale comprend en outre au moins un additif choisi parmi les agents de glissement et les agents antistatiques.

4. Film selon l'une quelconque des revendications précédentes, **caractérisé en ce que** le polyéthylène linéaire de la couche externe est un polyéthylène linéaire métallocène.

5. Film selon l'une quelconque des revendications 1 à 3, **caractérisé en ce que** la couche externe est exempte de polyéthylène linéaire métallocène.

6. Film selon la revendication 5, **caractérisé en ce que** le polyéthylène linéaire de la couche externe présente une densité comprise entre 0,918 et 0,936.

7. Film selon l'une quelconque des revendications précédentes, **caractérisé en ce que** chacune des couches externes comprend de 50 à 100% en poids, par rapport au poids total de la couche, de polyéthylène linéaire, le complément étant du polyéthylène basse densité radicalaire.

8. Film selon la revendication 7, **caractérisé en ce que** chacune des couches externes comprend 80% en poids de polyéthylène linéaire.

9. Film selon l'une quelconque des revendications 1 à 8, **caractérisé en ce que** le polyéthylène basse densité radicalaire présente une densité comprise entre 0,918 et 0,935.

10. Film selon l'une quelconque des revendications précédentes, **caractérisé en ce que** chacune des couches externes a une épaisseur représentant de 5 à 15% de l'épaisseur totale du film.

11. Film selon la revendication 10, **caractérisé en ce que** chacune des couches externes a une épaisseur représentant 10% de l'épaisseur totale du film.

12. Film selon l'une quelconque des revendications précédentes, **caractérisé en ce que** l'épaisseur totale du film est comprise entre 10 et 120 µm.

13. Film selon la revendication 12, **caractérisé en ce que** l'épaisseur totale est comprise entre 30 et 100 µm.

14. Groupement de produits emballé au moyen d'un film thermorétracté, **caractérisé en ce que** le film est tel que défini dans l'une quelconque des revendications précédentes.

## Claims

1. High-strength high-clarity heat-shrinkable film having a gloss of greater than or equal to 90% according to DIN 67530, a haze of less than or equal to 3% according to the ASTM D1003 standard and a yield strength of greater than 15.5 N/mm² according to the ISO 527/3 standard in the machine direction and in the cross direction, comprising:
- a central layer, comprising a blend of radical low-density polyethylene and of high-density polyethylene, the high-density polyethylene being present in an amount of 10 to 20% by weight relative to the total weight of the central layer; and
- two outer layers sandwiching the central layer between them, each of the outer layers comprising at least 50% by weight, relative to the total weight of the layer, of linear polyethylene and having a thickness representing from 5 to 25% of the total thickness of the film.

2. Film according to Claim 1, **characterized in that** the high-density polyethylene has a relative density of between 0.945 and 0.980.

3. Film according to either of the preceding claims, **characterized in that** the central layer furthermore includes at least one additive chosen from slip agents and antistatic agents.

4. Film according to any one of the preceding claims, **characterized in that** the linear polyethylene of the outer layer is a metallocene linear polyethylene.

5. Film according to any one of Claims 1 to 3, **characterized in that** the outer layer is free of metallocene linear polyethylene.

6. Film according to Claim 5, **characterized in that** the linear polyethylene of the outer layer has a relative density of between 0.918 and 0.936.

7. Film according to any one of the preceding claims, **characterized in that** each of the outer layers comprises from 50 to 100% by weight, relative to the total weight of the layer, of linear polyethylene, the remainder being radical low-density polyethylene.

8. Film according to Claim 7, **characterized in that** each of the outer layers comprises 80% by weight of linear polyethylene.

9. Film according to any one of Claims 1 to 8, **characterized in that** the radical low-density polyethylene has a relative density of between 0.918 and 0.935.

10. Film according to any one of the preceding claims, **characterized in that** each of the outer layers has a thickness representing from 5 to 15% of the total thickness of the film.

11. Film according to Claim 10, **characterized in that** each of the outer layers has a thickness representing 10% of the total thickness of the film.

12. Film according to any one of the preceding claims, **characterized in that** the total thickness of the film is between 10 and 120 µm.

13. Film according to Claim 12, **characterized in that** the total thickness is between 30 and 100 µm.

14. Group of products packaged by means of a heat-shrunk film, **characterized in that** the film is as defined in any one of the preceding claims.

## Patentansprüche

1. Hochfeste und hochklare wärmeschrumpfbare Folie, die einen Glanz größer oder gleich 90 % gemäß DIN 67530 und eine Trübung kleiner oder gleich 3 % gemäß ASTM-Norm D1003 und eine Streckspannung größer als 15,5 N/mm² gemäß Iso-Norm 527/3 in Maschinenrichtung und in Querrichtung aufweist, umfassend:
- eine mittlere Schicht, umfassend radikalisches Polyethylen niedriger Dichte und Polyethylen hoher Dichte, wobei das Polyethylen hoher Dichte in einer Menge von 10 bis 20 Gew.-%, bezogen auf das Gesamtgewicht der mittleren Schicht vorhanden ist,
- die zwischen zwei äußeren Schichten angeordnet wird (Sandwich), wobei jede der äußeren Schichten mindestens 50 Gew.-%, bezogen auf das Gesamtgewicht der Schicht, lineares Polyethylen umfasst, und eine Dicke aufweist, die 5 bis 25 % der Gesamtdicke der Folie darstellt.

2. Folie nach Anspruch 1, **dadurch gekennzeichnet, dass** das Polyethylen hoher Dichte eine Dichte im Bereich zwischen 0,945 und 0,980 aufweist.

3. Folie nach einem der vorhergehenden Ansprüche, **dadurch gekennzeichnet, dass** die mittlere Schicht ferner mindestens ein Additiv umfasst, ausgewählt aus Gleitmitteln und Antistatikmitteln.

4. Folie nach einem der vorhergehenden Ansprüche, **dadurch gekennzeichnet, dass** das lineare Polyethylen der äußeren Schicht ein lineares Metallocen-Polyethylen ist.

5. Folie nach einem der Ansprüche 1 bis 3, **dadurch gekennzeichnet, dass** die äußere Schicht frei von linearem Metallocen-Polyethylen ist.

6. Folie nach Anspruch 5, **dadurch gekennzeichnet, dass** das lineare Polyethylen der äußeren Schicht eine Dichte im Bereich zwischen 0,918 und 0,936 aufweist.

7. Folie nach einem der vorhergehenden Ansprüche, **dadurch gekennzeichnet, dass** jede der äußeren Schichten 50 bis 100 Gew.-%, bezogen auf das Gesamtgewicht der Schicht, lineares Polyethylen umfasst, wobei der Rest radikalisches Polyethylen niedriger Dichte ist.

8. Folie nach Anspruch 7, **dadurch gekennzeichnet, dass** jede der äußeren Schichten 80 Gew.-% lineares Polyethylen umfasst.

9. Folie nach einem der Ansprüche 1 bis 8, **dadurch gekennzeichnet, dass** das radikalische Polyethylen niedriger Dichte eine Dichte im Bereich zwischen 0,918 und 0,935 aufweist.

10. Folie nach einem der vorhergehenden Ansprüche, **dadurch gekennzeichnet, dass** jede der äußeren Schichten eine Dicke aufweist, die 5 bis 15 % der Gesamtdicke der Folie darstellt.

11. Folie nach Anspruch 10, **dadurch gekennzeichnet, dass** jede der äußeren Schichten eine Dicke aufweist, die 10 % der Gesamtdicke der Folie darstellt.

12. Folie nach einem der vorhergehenden Ansprüche, **dadurch gekennzeichnet, dass** die Gesamtdicke der Folie im Bereich zwischen 10 und 120 µm liegt.

13. Folie nach Anspruch 12, **dadurch gekennzeichnet, dass** die Gesamtdicke im Bereich zwischen 30 und 100 µm liegt.

14. Gruppe von Produkten, die mithilfe einer wärmegeschrumpften Folie verpackt sind, **dadurch gekennzeichnet, dass** die Folie so ist, wie in einem der vorhergehenden Ansprüche definiert.
